# EUROPÄISCHE PATENTSCHRIFT

(11) **EP 0 828 931 B1**
(45) Veröffentlichungstag und Bekanntmachung des Hinweises auf die Patenterteilung: **15.09.1999**
(21) Anmeldenummer: 96918644.4
(22) Anmeldetag: 30.05.1996
(51) Int. Cl.: F02C 5/00

(54) **ROTATIONSEXPLOSIONSMOTOR**
ROTARY INTERNAL COMBUSTION ENGINE
MOTEUR A EXPLOSION A ROTATION

(30) Priorität: 01.06.1995 DE 19520100
(43) Veröffentlichungstag der Anmeldung: 18.03.1998
(73) Patentinhaber: Kuhn, Jean, 61137 Schöneck (DE)
(72) Erfinder: Kuhn, Jean, 61137 Schöneck (DE)
(74) Vertreter: Schumacher, Bernd, Dipl.-Ing.
(86) Internationale Anmeldenummer: EP9602316
(87) Internationale Veröffentlichungsnummer: WO9638659

(56) Entgegenhaltungen:
- CH-A- 105 081
- DE-A- 2 252 040
- DE-A- 2 757 221
- FR-A- 801 662

## Beschreibung

Die Erfindung betrifft einen Rotationsexplosionsmotor.

Ein derartiger Rotationsexplosionsmotor ist aus der DE-OS 2 357 985 bekannt. Hierbei sind zwei diametrale Explosionskammern vorhanden, die sich in radialer Richtung zum Rotor öffnen. Der Rotor ist an seinem gesamten Umfang mit einzelnen Rotorkammern ausgebildet, deren Druckbeaufschlagungswände schräg zur Radialrichtung verlaufen. Ein solcher Motor hat unter anderem den Nachteil, daß radiale Explosionsstöße auftreten, was zu Motorvibrationen und Energieverlusten führt. Ein weiteres Problem besteht in der Abdichtung der Rotorkammern gegenüber dem umgebenden Stator, weil die unmittelbar aneinandergrenzenden Rotorkammern nur linienförmig abgedichtet sind. Dieses führt zu einer Beeintrachtigung des Wirkungsgrades. Der bekannte Motor muß durch einen üblichen elektrischen Anlasser gestartet werden.

Motoren ähnlicher Bauart haben Explosionskammern, die in aufwendiger Weise auslaßseitig ventilgesteuert sind.

Der vorliegenden Erfindung liegt die Aufgabe zugrunde, einen Motor der im Oberbegriff genannten Art so auszubilden, daß er bei großem Wirkungsgrad sehr laufruhig arbeitet und ohne einen üblichen elektrischen Anlasser selbsttätig anläuft.

Zur Lösung der gestellten Aufgabe zeichnet sich ein Rotationsexplosionsmotor durch die in Anspruch 1 aufgeführten Merkmale aus.

Durch die Winkelanordnung eines jeden Kammerauslasses gegenüber der sich vorbeibewegenden Druckbeaufschlagungswand und durch deren überwiegende Radialausrichtung ergeben sich eine optimale Energieausbeute und ein vibrationsfreier Motorbetrieb. Der druckdichte Paßsitz im Bereich zwischen den unter größerem Abstand benachbarten Rotorkammem begünstigt den Druckaufbau in den Explosionskammem und den Wirkungsgrad. Mit der vom Ansaugrotor angesaugten Fremd- oder Kühlluft ist eine wirksame Motorkühlung erziehlbar. Mit dem Verdichterrotor wird während des Motorbetriebes im Druckspeicher ein Druckluftvorrat aufgebaut, der zu einem selbsttätigen Motorstart benutzt wird. Ein separater elektrischer Anlasser ist also überflüssig. Beim Motorbetrieb wird der im Druckspeicher aufgebaute Druck auch dazu benutzt, die Explosionskammern mit Druckluft und unter gleichen Druck stehendem Kraftstoff zu versorgen.

Die Ausgestaltungen der Ansprüche 2 und 3 erlauben ein bedarfsgerechtes und schonendes Verbinden des Motors mit einem anzutreibenden Element. Besonders günstige energetische Verhältnisse ermöglicht die Weiterbildung von Anspruch 4.

Mit den Maßnahmen der Ansprüche 5 und 6 läßt sich in sehr einfacher und rationeller Weise die Zündenergie für die Zündkerzen in den Explosionskammern erzeugen.

Wenn sich gemäß Anspruch 7 während eines gesamten Explosionsstoßes ständig Druckbeaufschlagungswände am Kammerauslaß vorbeibewegen, ist ein großer Wirkungsgrad in Verbindung mit einem ruhigen Motorlauf erzielbar. Dabei hat sich die Ausbildung von Anspruch 8 besonders bewährt.

Eine günstige Bauform ergibt sich durch die Merkmale der Ansprüche 9 bis 13. Die Abgase können in den Abgas-Ablaßkanal strömen. Eine auslaßseitige Drosselung der Rotorkammern verbessert die Energieumsetzung. Die in den Abgas-Ablaßkanal eintauchenden Rotorantriebsschaufeln führen zu einer weiteren Verbesserung des Wirkungsgrades.

Die zeitgerechte Zufuhr von Kraftstoff sowie Luft lassen sich mit den Merkmalen der Ansprüche 14 und 15 in sehr zweckmäßiger Weise durchführen.

Mit den Merkmalen der Ansprüche 16 und 17 können die Vibrationsarmut und die Energieausbeute verbessert werden.

Die Ausgestaltungen der Ansprüche 18 bis 21 ermöglichen eine einfache Steuerung der einzelnen Betriebsabläufe. Der Ventilschieber steuert die entsprechenden Verbindungen für die Druckluft und für die vom Verdichterrotor verdichtete, dem Druckspeicher zugeführte Druckluft. Das Startventil steuert beim selbsttätigen Motorstart den Zufluß von Druckluft auf die Rotorschaufeln des Abgasrotors. Dadurch kann der Motor in sehr einfacher Weise angeworfen werden.

Ein dreiphasig arbeitender Tankverschluß gemäß den Ansprüchen 22 und 23 sorgt für eine bedarfsgerechte Organisation der Strömungsverbindungen im Druckspeicher. Hierdurch kann der normalerweise mit dem Druckspeicher verbundene Kraftstofftank zum Betanken vorübergehend strömungsmäßig abgetrennt und entlüftet werden.

Besonders große Druckluftvorräte können gemaß Anspruch 24 dadurch gespeichert werden, indem dieses motorintern und motorextern erfolgt.

Bei der alternativen Bauform der Ansprüche 25 und 26 wird das Abgas aus den Rotorkammern über gegenüber den Explosionskammern umfangsmäßig versetzt angeordnete Öffnungen im Stator nach außen abgeführt.

Eine bezüglich einer Montage und Demontage besonders bevorzugte Ausführungsform ergibt sich durch den scheibenförmigen, verspannbaren Aufbau aus Anspruch 27.

Die weitere Ausgestaltung von Anspruch 28 beinhaltet eine bevorzugte Art der Kraftstoffzufuhr über ein Kraftstoffsteuerventil, ferner über eine hiervon versorgte Ringleitung und über einzelne Kraftstoffzuleitungen.

Die Erfindung wird nachfolgend an zeichnerisch dargestellten Ausführungsbeispielen näher erläutert. Es zeigen:
- Fig. 1: Einen Rotationsexplosionsmotor nach der vorliegenden Erfindung in einem zentralen Längsschnitt,
- Fig. 2: den Motor aus Fig. 1 in einem zu dieser Figur versetzten Längsschnitt.
- Fig. 3: den Motor aus Fig.1 im Querschnitt längs der Linie III - III aus Fig.1,
- Fig. 4: einen alternativen Motor mit sich nur nach außen öffnenden Rotorkammern und mit äußeren Abgas-Ablaßöffnungen in einem Fig. 3 entsprechendem Querschnitt,
- Fig. 5: in zwei Ansichten längs der Linie V-V aus Fig. 1 einen verdrehbaren Ventilschieber,
- Fig. 6: den Bereich eines Ventils in 4 Querschnitten und eine Nockensteuerung für das Ventil,
- Fig. 7: einen Querschnitt längs der Linie VII -VII aus Fig.1 zum Darstellen von Zündmitteln,
- Fig. 8: einen Querschnitt längs der Linie VIII-VIII aus Fig. 2 zum Darstellen der Kraffstoffzuführung und
- Fig. 9: eine Ansicht längs der Linie IX-IX aus Fig. 2 zum Darstellen einer Ventilnockensteuerung.

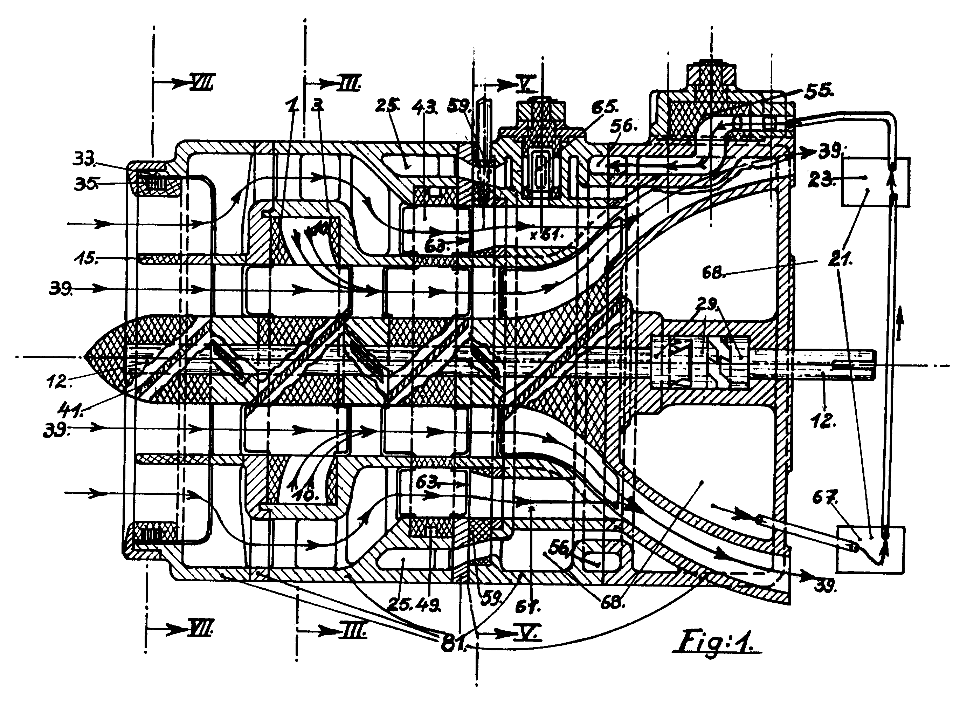

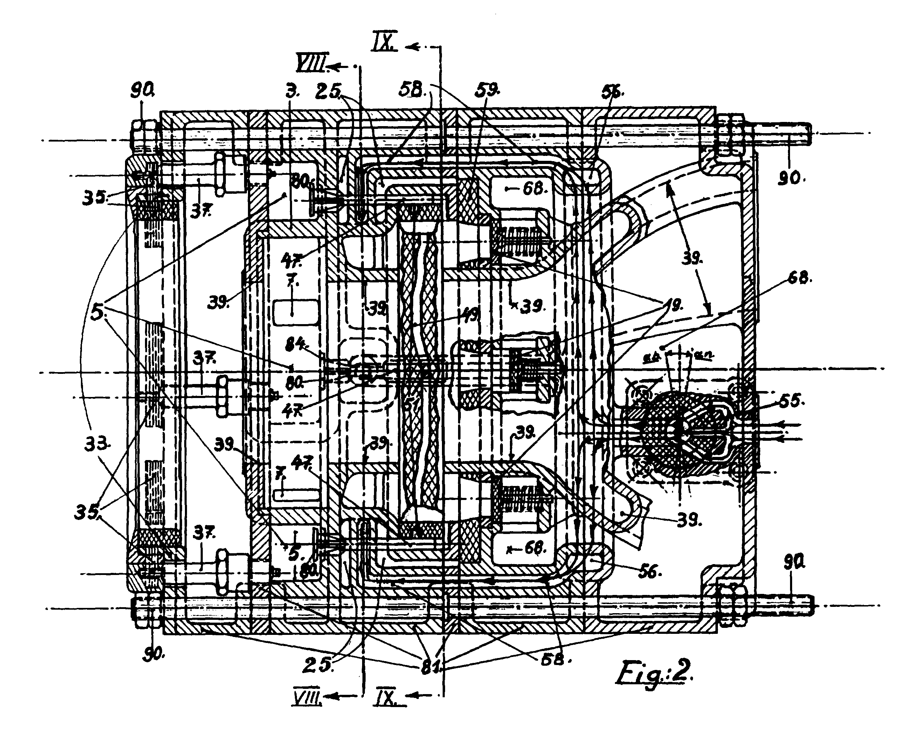

Gemäß den Figuren 1 und 2 sind mehrere scheibenförmig ausgebildete Motorelemente 81 konzentrisch hintereinander angeordnet und durch periphere Gewindebolzen 90 verspannt. Ein derartiger aus Modulen bestehender Motor kann sehr einfach montiert und demontiert werden, indem die einzelnen Module auf eine zentrale Antriebswelle 12 drehfest verkeilt aufgeschoben und longitudinal verspannt werden. Die Bolzen können jeweils einen Bolzenabsatz haben, der eine getrennte Montage/ Demontage der Motorteile an den beiden Seiten des Bolzenabsatzes ermöglicht.

Die Antriebswelle 12 ist über eine Fliehkraftkupplung 29 gemäß Fig. 1 mit einer Abtriebswelle verbunden, die ihrerseits mit einem anzutreibenden Element gekoppelt ist. In nicht dargestellter Weise kann der Fliehkraftkupplung unmittelbar eine energiespeichernde Drehmasse, wie eine Schwungscheibe, nachgeschaltet sein. Diese kann im Betrieb auch dann das anzutreibende Element vorübergehend antreiben, wenn die Fliehkraftkupplung ausgerastet ist. Vorzugsweise handelt es sich um eine Rasterkupplung, die beim Hochlaufen des Motors weich einrastet, wenn eine bestimmte Drehzahldifferenz überschritten wird, und die weich ausrastet, wenn der Motor ausläuft oder gegenüber der Drehmasse zu langsam wird.

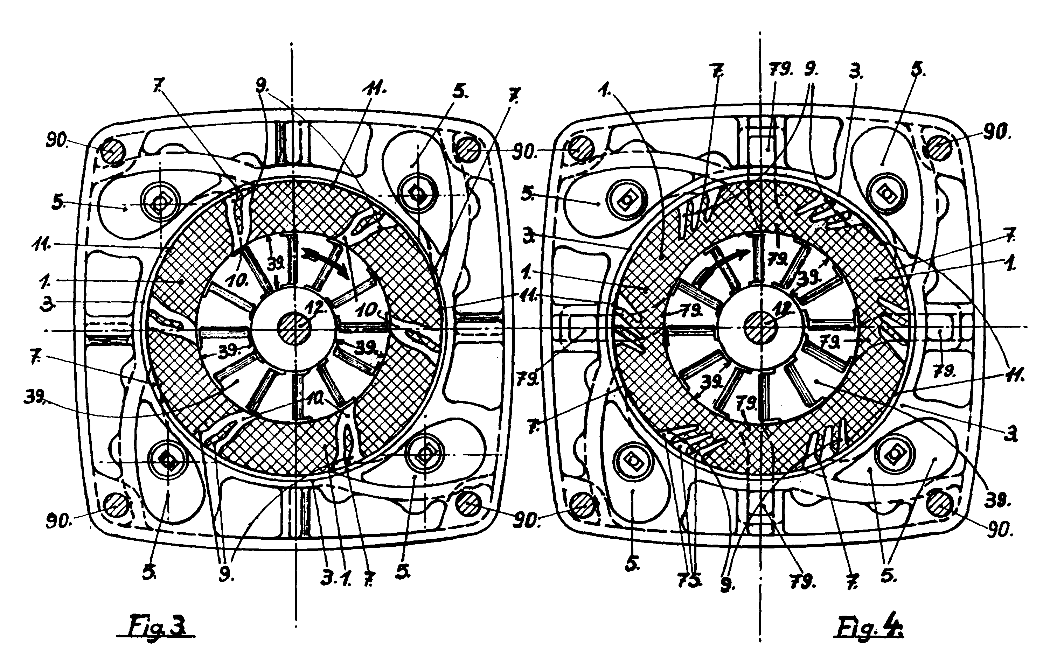

Den Kernpunkt des Motors bildet ein Antriebsrotor 1 mit einem ihm zugeordneten Stator 3. Gemäß den Figuren 3 und 4 sind in dem Stator 3 im vorliegenden Fall vier gleichmäßig verteilte Explosionskammern 5 vorgesehen, deren ventilfreie Kammerauslässe 7 überwiegend tangential zum Rotorumfang verlaufen. In jede Explosionskammer 5 ragen gemäß Fig. 2 eine Zündkerze 37 und ein Ventil 80 an einer Ventilstange 47 zum Zuführen von Druckluft und unter gleichem Druck stehendem Kraftstoff. Wenn das Kraftstoff-Luft-Gemisch zur Explosion gebracht wird, kann sich der Explosionsdruck über den Kammerauslaß 7 überwiegend tangential nach innen in eine Rotorkammer 10 (Fig. 3) bzw. 75 (Fig. 4) des Antriebsrotors 1 entladen.

Im Umfangsbereich des Antriebsrotors 1 sind im vorliegenden Fall sechs gleichmäßig verteilte Rotorkammern 10 (Fig. 3) bzw. 75 (Fig. 4) ausgebildet, die jeweils mehrere, etwa radial verlaufende Druckbeaufschlagungswände 9 aufweisen, und zwar gemäß Fig. 3 zwei und gemäß Fig. 4 drei Druckbeaufschlagungswände 9 (bezogen auf die Antriebsdrehrichtung).

Zwischen dem Antriebsrotor und seinem Stator 3 ist ein relativ enger Paßsitz vorgesehen, der ein problemloses, verschleißfreies Drehen des Rotors zuläßt und gleichzeitig eine weitgehende Druckabdichtung zwischen diesen Teilen immer dann sicherstellt, wenn der Kammerauslaß 7 dem Rotorumfang und nicht einer Rotorkammer 10 bzw. 75 gegenüberliegt. Das Gemisch in den Explosionskammern wird entsprechend synchronisiert immer dann gezündet, wenn sich gerade eine Rotorkammer vorbeizubewegen beginnt. Somit kann der Explosionsdruck von Anfang an etwa rechtwinklig auf die sich nacheinander vorbeibewegenden Druckbeaufschlagungswände 9 einwirken, was zu einem Drehen des Rotors führt.

Die Rotorkammern 10 aus Fig. 3 sind an ihrer radialen Innenseite - vorzugweise über eine gewisse Drosselung - mit einem zentralen, ringförmigen Abgas-Ablaßkanal 39 verbunden, der gemäß Fig. 1 am Motorausgang nach außen verläuft. Im Gegensatz hierzu sind die Rotorkammern 75 aus Fig. 4 innen geschlossen. Das Abgas wird hier über äußere Abgas-Ablaßöffnungen 79 (sind mit dem Fig. 3 entsprechenden zentralen Abgas-Ablaßkanal 39 verbunden) im Stator 3 abgeführt, sobald sich die Rotorkammern 75 nach den Explosionsvorgängen an diesen Ablaßöffnungen vorbeibewegen. Nach der Explosion kann das Abgas aus der zugeordneten Rotorkammer 10 bzw. 75 in der oben beschriebenen Weise abströmen.

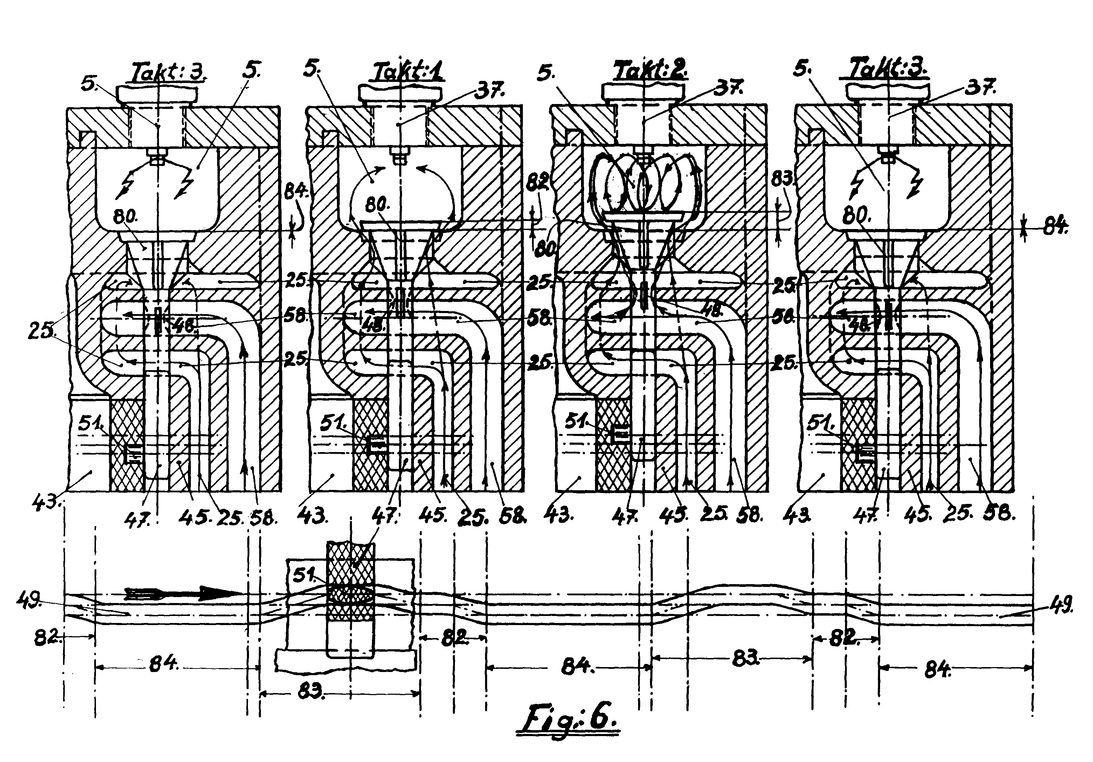

Dem Antriebsrotor ist ein hiervon mitgedrehter Ansaugrotor 15 mit einem Stator 33 vorgeschaltet. Dieser saugt Fremd- oder Kühlluft an, die ihrerseits zum Kühlen durch den Antriebsrotor 1 sowie über und/oder durch den diesen umgebenden Stator 3 mit der oder den Explosionskammern 5 geleitet wird. Im vorliegenden Fall sind der Ansaugrotor 15 und dessen Stator 33 gemäß Fig. 7 mit elektromagnetischen Zündmitteln 35 ausgebildet, die mit den Zündkerzen 37 verbunden sind. Beim Drehen des Ansaugrotors 15 werden dadurch synchronisierte Zündimpulse für die Explosionsvorgänge in den Explosionskammern 5 erzeugt.

Dem Antriebsrotor 1 ist ein hiervon mitgedrehter Verdichterrotor 17, 43 mit einem Stator 45 nachgeschaltet. Der Rotor verdichtet die ihm beim Motorbetrieb vom Ansaugrotor 15 über den Antriebsrotor 1 sowie dessen Stator 3 zugeleiteten Fremd- oder Kühlluft. Die an der Druckseite 63 des Verdichterrotors 17, 43 anstehende Druckluft gelangt beim Motorbetrieb zumindest teilweise über einen mehr oder weniger weit geöffneten Ventilschieber 59 und über diesem nachgeschaltete Rückschlagventile 19 zu einem Druckspeicher 21. Wenn der Ventilschieber 59 im Teillastbetrieb nicht ganz geöffnet ist, gelangt ein Teil der Druckluft von der Druckseite 63 über den Ventilschieber 59 zu sich nach außen öffnenden, in den Abgas-Ablaßkanal 39 mündenden Abflußkanälen 61. Bei geschlossenem Ventilschieber 59 ist die Druckseite 63 nur mit den Abflußkanälen 61 verbunden.

Zu dem Druckspeicher 21 gehören ein externer Kraftstofftank 23 und ein hiermit normalerweise strömungsmäßig verbundener Druckluftraum, der im vorliegenden Fall aus einer externen Druckluftkammer 67 und einer hiermit verbundenen, motorinternen Druckluftkammer 68 besteht. Somit kann beim Motorbetrieb in dem Druckspeicher 21 ein für den Motorbetrieb und das Anlaufen des Motors erforderlicher größerer Druckluftvorrat aufgebaut und gespeichert werden.

Beim Motorbetrieb gelangt die Druckluft aus der Druckluftkammer 68 über den mehr oder weniger weit geöffneten Ventilschieber 59 zu einer Gemischbildungsvorkammer 25, die aus den Fig. 2 und 6 ersichtlich ist. Sobald das zu der Explosionskammer 5 führende Ventil 80 gemäß Fig. 6 durch einen Ventilsteuernocken 51 an der Ventilstange 47 aus einer Schließposition 84 (Ventiltakt 3) in eine erste kleinere Öffnungsposition 82 (Ventiltakt 1) gelangt, strömt zunächst nur Druckluft in die Explosionskammer 5 ein. Beim weiteren Öffnen des Ventils bis zu einer zweiten Öffnungsposition 83 (Ventiltakt 2) gelangt schließlich der unter gleichem Überdruck stehende Kraftstoff (aus dem Kraftstofftank 23 über eine Ringleitung 56 und über Kraftstoffzuleitungen 58) über ein sich dann öffnendes, an der Ventilstange 47 ausgebildetes oder hiermit verbundenes Zusatz- bzw. Stößelventil 48 (und über das vorerwähnte Ventil 80) ebenfalls in die Explosionskammer 5. Danach wird das Ventil 80 wieder in die Schließpostion 84 (Ventiltakt 3) bewegt, und das Gemisch wird gezündet. Die beschriebene Ventiltakt-Folge wiederholt sich entsprechend.

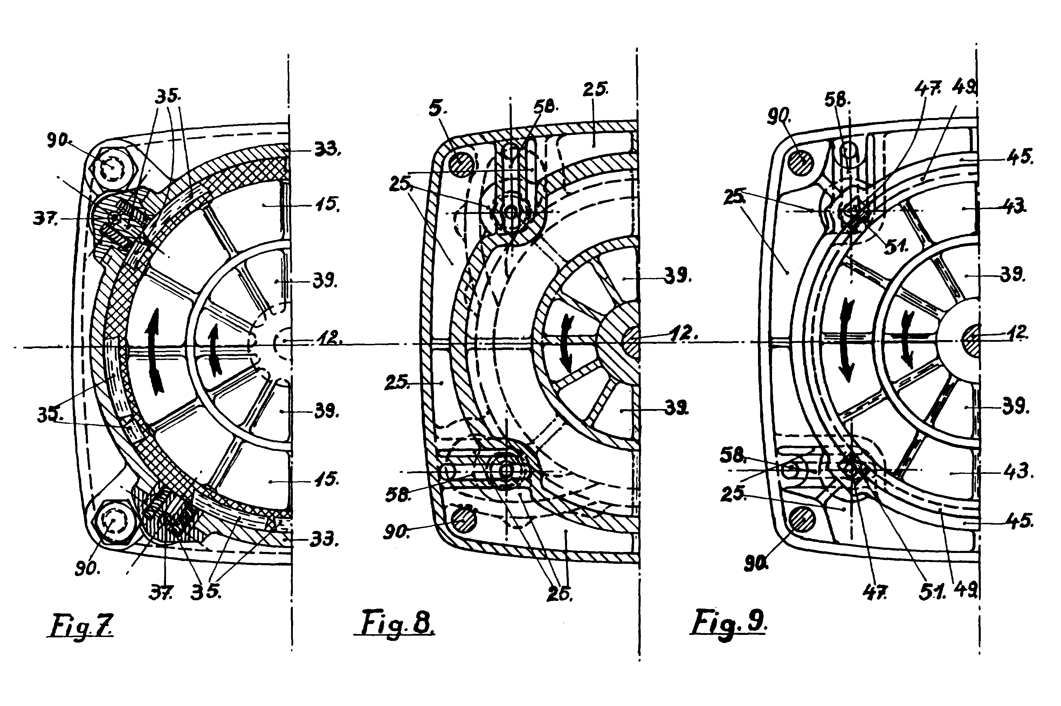

Der Ventilsteuernocken 51 greift gemäß den Figuren 6 und 9 in eine entsprechend geformte Kurven- oder Nockenbahn 49 ein, die im vorliegenden Fall am Verdichterrotor 17, 43 ausgebildet ist und sich mit diesem mitdreht. Dadurch kann der Steuernocken 51 (während der Ventiltakte 1, 2, 3) über die Ventilstange 47 die beschriebene synchronisierte Zufuhr von Druckluft und unter Druck stehendem Kraftstoff steuern.

Dem Verdichterrotor 17, 43 ist schließlich noch ein ebenfalls über die Antriebswelle 12 mitgedrehter Abgasrotor 27 nachgeschaltet. Beim Motorstart wird in dem Druckspeicher 21 gespeicherte Druckluft über ein zeitweilig geöffnetes Startventil 65 auf die Rotorschaufeln des Abgasrotors 27 geleitet, um den Motor allein durch diese Druckluft in Drehung zu versetzen. Für den Motorstart wird auch der Ventilschieber 59 geöffnet, so daß die Explosionskammern 5 ventilgesteuert mit dem zu zündenden Gemisch gefüllt werden können und nach erfolgtem Motorstart vom Verdichterrotor 17, 43 verdichtete Druckluft über die Rückschlagventile 19 zum Druckspeicher 21 gelangen kann, damit dieser für den Betrieb und für einen späteren Motorstart ständig aufgeladen bleibt.

Zur besseren Energieausbeute tauchen in den Abgas-Ablaßkanal 39 einige Rotorschaufeln 41 ein, die zu den vier Rotoren 1, 15, 17, 27 gehören.

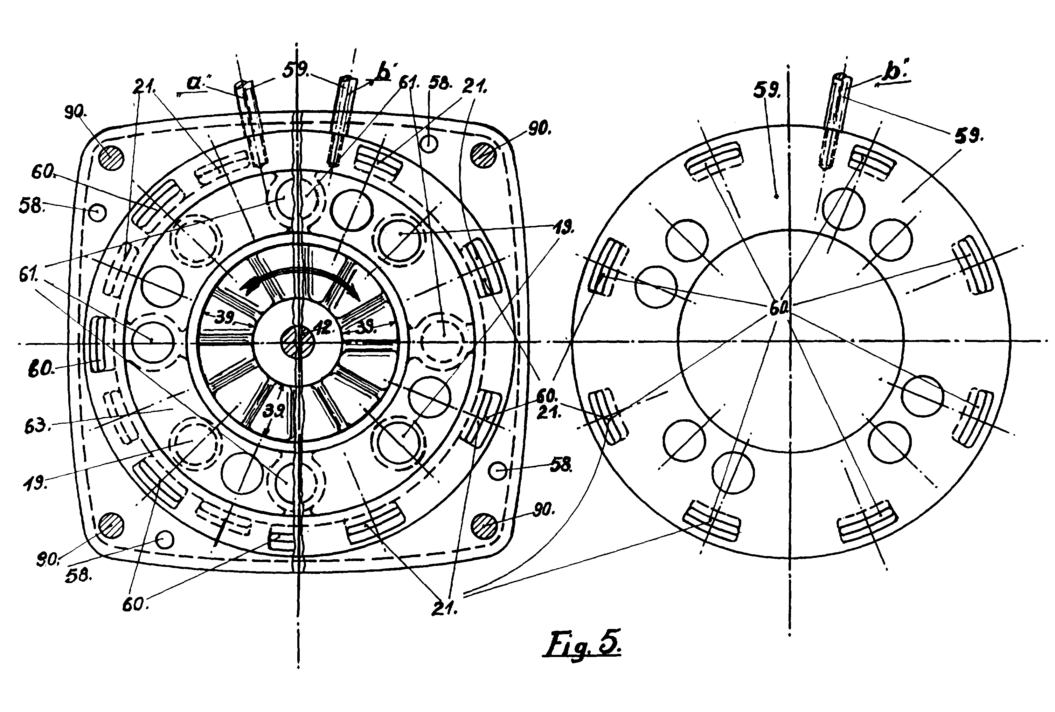

Gemäß Figur 5 ist der Ventilschieber 59 zwischen einer vollständigen Schließposition a und einer vollständigen Öffnungsposition b verdrehbar. In der Schließposition (Fig. 5 linkes Bild, linker Bildabschnitt) sind die äußeren Druckluftverbindungen 60 (radial äußere Öffnungen am Ventilschieber 59) vom Druckspeicher 21 zur Gemischbildungsvorkammer 25 unterbrochen. Auch die Strömungsverbindungen zwischen der Druckseite 63 des Verdichterrotors 17, 43 und den Rückschlagventilen 19 sind unterbrochen. Jedoch ist die Druckseite 63 über den Ventilschieber 59 mit dem Abflußkanal 61 verbunden. In der Öffnungsposition (Fig. 5 linkes Bild, rechter Bildabschnitt, und Fig. 5 rechtes Bild) sind die äußeren Druckluftverbindungen 60 vom Druckspeicher 21 zur Gemischbildungsvorkammer 25 geöffnet. Auch die Strömungsverbindungen zwischen der Druckseite 63 des Verdichterrotors 17, 43 und den Rückschlagventilen 19 sind geöffnet. Jedoch ist die Druckseite 63 über den Ventilschieber 59 von dem Abflußkanal 61 abgetrennt. In den zwischen den Extrempositionen befindlichen Zwischenstellungen des Ventilschiebers 59 können die genannten Strömungsverbindungen zwischen vollständig offen und geschlossen variiert werden, wobei die Verbindung zum Abflußkanal 61 gegensinnig zu den anderen Verbindungen verstellt wird. Mit dem Ventilschieber 59 läßt sich somit in Verbindung mit einem Kraftstoffsteuerventil 55 die Motorleistung bzw. -drehzahl einstellen. Während eines jeden Motorbetriebes ist der Druckspeicher 21 für einen neuen Motorstart wieder aufgeladen.

Das erwähnte Kraftstoffsteuerventil 55 befindet sich gemäß Fig. 1 in der Strömungsverbindung zwischen dem Kraftstofftank 23 und der Ringleitung 56. Es kann zum Abstellen des Motors geschlossen und für den Motorbetrieb zur Kraftstoffversorgung der Ringleitung 56 mehr oder weniger weit geöffnet werden. Die Funktion des Kraftstoffsteuerventils 55 kann manuell steuerbar und/oder mit derjenigen des Ventilschiebers 59 durch bekannte Verknüpfungsmittel gekoppelt sein. Die Ringleitung 56 ist über je eine Kraftstoffzuleitung 58, in der sich ein nicht dargestelltes Kraftstoff-Rückschlagventil befindet, mit dem das entsprechende Zusatz- bzw. Stößelventil 48 umgebenden Bereich verbunden. Bei geöffnetem Kraftstoffsteuerventil 55 steht der Kraftstoff in der Ringleitung 56 unter Druck, so daß die erwähnten Kraftstoff-Rückschlagventile in den Kraftstoffzuleitungen 58 druckgesteuert geöffnet sind und Kraftstoff nachströmen kann. Wenn dagegen das Kraftstoffsteuerventil 55 geschlossen ist, fällt der Druck in der Ringleitung 56 ab, so daß die Kraftstoff-Rückschlagventile schließen und kein weiterer Kraftstoff aus der Ringleitung austreten kann. Zum Abstellen des Motors werden somit das Kraftstoffsteuerventil 55 und der Ventilschieber 59 für die Druckluft geschlossen. Obwohl die Ventile 80 und 48 beim Auslaufen des Motors bis zum Motorstillstand weiterhin nockengesteuert arbeiten, kann aus den genannten Gründen aber kein Gemisch mehr gebildet werden.

Das Startventil 65 wird nur für den Motorstart, bei dem auch der Ventilschieber 59 geöffnet ist, vorübergehend geöffnet, damit die Druckluft den Motor anwerfen kann. Nach dem Motorstart wird das Startventil 65 manuell oder selbsttätig geschlossen.

Der einen Teil des Druckspeichers 21 bildende Kraftstofftank 23 ist mit einem besonderen, nicht dargestellten Tankverschluß versehen, der dafür sorgt, daß der Kraftstofftank zum Betanken strömungsmäßig vorübergehend von dem Druckluftspeicher abgetrennt und entlüftet wird. Zu diesem Zweck hat ein Tankverschlußdeckel vier Drehstellungen. In der ersten Drehstellung (Normal- oder Betriebsstellung) ist der Kraftstofftank 23 mit dem Druckspeicher 21 verbunden, und eine Tankentlüftung ist geschlossen. In der zweiten Drehstellung (erste Betätigungsphase) ist die Verbindung mit dem Druckspeicher 21 durch ein Ventil unterbrochen, und die Tankentlüftung ist immer noch geschlossen. In der dritten Drehstellung (zweite Betätigungsphase) ist die Tankentlüftung (Ventil) geöffnet, so daß im Kraftstofftank 23 ein Druckausgleich mit dem Umgebungsdruck stattfinden kann. In der vierten Drehstellung (dritte Betätigungsphase), die mit Rücksicht auf den erforderlichen Druckausgleich nur verzögert erzielbar ist, kann der Tankverschlußdeckel abgenommen werden. Nach dem Betanken werden die Drehstellungen des Tankverschlußdeckels umgekehrt durchlaufen, bis wieder die Normal- oder Betriebsstellung erreicht ist. Die Einzelteile des Tankverschlusses können alle in einem entsprechend ausgebildeten kompakten Tankverschlußdeckel integriert sein.

## Patentansprüche

1. Rotationsexplosionsmotor mit einer Antriebswelle, ferner mit einem damit drehfest verbundenen Antriebsrotor, der eine oder mehrere peripher verteilte, nach außen geöffnete Rotorkammern mit jeweils mehreren schräg verlaufenden, als eine Art Antriebsschaufeln wirkenden Druckbeaufschlagungswänden zum Umsetzen von Explosionsdruck in eine Rotordrehbewegung aufweist, ferner mit einem den Antriebsrotor umgebenden Stator, in dem wenigstens eine, nach innen zum Antriebsrotor geöffnete Explosionskammer mit einem Kammerauslaß ausgebildet ist, an der sich die Rotorkammern mit jeweils gleichzeitig zumindest zwei Druckbeaufschlagungswänden vorbeibewegen, wobei in jede Explosionskammer eine elektrische Zündkerze und zumindest ein Gemischeinlaß oder je ein Luft- sowie Kraftstoffeinlaß ventilgesteuert münden,
wobei erstens jeder Kammerauslaß (7) einer jeden kammerauslaßseitig ventilfrei ausgebildeten Explosionskammer (5) etwa rechtwinklig auf jede sich an ihm vorbeibewegende Druckbeaufschlagungswand (9) einer Rotorkammer (10, 75) ausgerichtet ist, wobei jeder Kammerauslaß (7) überwiegend tangential in Rotordrehrichtung und jede Druckbeaufschlagungswand (9) überwiegend radial angeordnet sind,
wobei zweitens jeweils zwischen in Umfangsrichtung in größeren Abständen benachbarten Rotorkammern (10, 75) ein durchgehend enger, Rotordrehungen zulasssender, bezüglich der Explosionsstöße weitgehend druckdichter Paßsitz (11) zwischen dem Antriebsrotor (1) und dessen Stator (3) vorgesehen ist,
wobei drittens auf der Antriebswelle (12) ein hiermit drehfest verbundener, dem Antriebsrotor (1) vorgeschalteter Ansaugrotor (15) zum Ansaugen von Fremd- oder Kühlluft angeordnet ist, die zum Kühlen durch den Antriebsrotor (1) sowie über und/oder durch den diesen umgebenden Stator (3) mit der oder den Explosionskammern (5) geleitet wird,
wobei viertens auf der Antriebswelle (12) ein hiermit drehfest verbundener, dem Antriebsrotor (1) nachgeschalteter Verdichterrotor (17,43) zum Verdichten der ihm beim Motorbetrieb von dem Ansaugrotor (15) über den Antriebsrotor (1) sowie dessen Stator (3) zugeleiteten Fremd- oder Kühlluft angeordnet ist,
wobei fünftens die verdichtete Fremd- oder Kühlluft beim Motorbetrieb über wenigstens ein Rückschlagventil (19) zu einem Druckspeicher (21) mit einer Druckluftkammer (67, 68) und einem Kraftstofftank (23) gelangt,
wobei sechstens der Druckspeicher für einen Motorstartvorgang und für den Motorbetrieb mit wenigstens einer zur Explosionskammer führenden ventilgesteuerten Gemischbildungsvorkammer (25) verbindbar ist,
und wobei siebtens der Druckspeicher während des Motorstartvorgangs strömungsmäßig vorübergehend mit den Rotorschaufeln eines mit der Antriebswelle (12) verbundenen Rotors, wie eines dem Verdichterrotor (17) nachgeschalteten Abgasrotors (27), verbindbar ist, wobei die so zugeleitete Druckluft nach einem Motorstillstand zunächst unmittelbar auch zum selbstanlaufenden Starten des Motors dient.

2. Rotationsexplosionsmotor nach Anspruch 1, dadurch gekennzeichnet, daß die Antriebswelle (12) am Motorausgang mit einer mit einem anzutreibenden Element verbindbaren Fliehkraftkupplung (29) gekoppelt ist.

3. Rotationsexplosionsmotor nach Anspruch 2, dadurch gekennzeichnet, daß die Fliehkraftkupplung (29) als Rasterkupplung ausgebildet ist, die beim Hochlaufen des Motors weich einrastet, wenn eine bestimmte Drehzahldifferenz überschritten wird, und die weich ausrastet, wenn der Motor ausläuft.

4. Rotationsexplosionsmotor nach Anspruch 2 oder 3, dadurch gekennzeichnet, daß der Fliehkraftkupplung eine mit einem anzutreibenden Element verbindbare energiespeichernde Drehmasse, wie eine Schwungscheibe, nachgeschaltet ist.

5. Rotationsexplosionsmotor nach einem der Ansprüche 1 bis 4, dadurch gekennzeichnet, daß ein mit der Antriebswelle (12) drehfest verbundener Rotor (15) sowie ein diesen umgebender Stator (33) mit elektromagnetischen Zündmitteln (35) zum Erzeugen elektrischer Zündenergie für die Zündkerzen (37) der Explosionskammern (5) vorhanden ist.

6. Rotationsexplosionsmotor nach Anspruch 5, dadurch gekennzeichnet. daß die elektromagnetischen Zündmittel (35) am Ansaugrotor (15) und einem diesen umgebenden Stator (33) angeordnet sind.

7. Rotationsexplosionsmotor nach einem der Ansprüche 1 bis 6, gekennzeichnet durch eine derartige Anzahl und Anordnung der Druckbeaufschlagungswände (9) einer jeden Rotorkammer (10, 75), daß sich während des gesamten Explosionsstoßes in einer Explosionskammer (5) zumindest bei der Nenndrehzahl ständig Druckbeaufschlagungswände (9) am Kammerauslaß (7) vorbeibewegen.

8. Rotationsexplosionsmotor nach einem der Ansprüche 1 bis 7, gekennzeichnet durch eine derartige Anzahl sowie Anordnung der Rotorkammern (10, 75) sowie Explosionskammern (5) und durch eine solche Steuerung bzw. Regelung der Explosionsvorgänge, daß sich zu Beginn eines jeden Explosionsstoßes die in Umfangsrichtung zumindest ersten beiden Druckbeaufschlagungswände (9) am Kammerauslaß (7) vorbeibewegen.

9. Rotationsexplosionsmotor nach einem der Ansprüche 1 bis 8, dadurch gekennzeichnet, daß die Rotorkammern (10) in Richtung zum Inneren des Antriebsrotors (1) in wenigstens einen longitudinalen, sich nach außen öffnenden Abgas-Ablaßkanal (39) münden.

10. Rotationsexplosionsmotor nach Anspruch 9, dadurch gekennzeichnet, daß die Rotorkammern (10) auslaßseitig zu dem wenigstens einen Abgas-Ablaßkanal (39) strömungsmäßig gedrosselt ausgebildet sind.

11. Rotationsexplosionsmotor nach Anspruch 9 oder 10, dadurch gekennzeichnet, daß in den zumindest einen Abgas-Ablaßkanal (39) zur Verbesserung der Energieausbeute mit der Antriebswelle (12) verbundene Rotorantriebsschaufeln (41) eintauchen.

12. Rotationsexplosionsmotor nach Anspruch 11, dadurch gekennzeichnet, daß zumindest einige der Rotorantriebsschaufeln (41) zum Antriebsrotor (1) gehören.

13. Rotationsexplosionsmotor nach einem der Ansprüche 9 bis 12, dadurch gekennzeichnet, daß der Abgas-Ablaßkanal (39) von durch den Ansaugrotor (15) zugeführter, sich mit dem Abgas aus den Rotorkammern (10) mischender Luft durchströmt ist.

14. Rotationsexplosionsmotor nach einem der Ansprüche 1 bis 13, dadurch gekennzeichnet, daß der Verdichterrotor (17,43) und dessen Stator (45) mit mechanischen, magnetischen oder elektrischen Ventilsteuerungsmitteln (47, 49, 51) für die zeitgerechte Zufuhr von Kraftstoff sowie Luft zu den Explosionskammern (5) ausgebildet sind.

15. Rotationsexplosionsmotor nach Anspruch 14, dadurch gekennzeichnet, daß mechanische Ventilsteuerungsmittel eine mit dem Verdichterrotor (43) mitbewegte Kurvenbahn (49) aufweisen, in die für jedes Ventil ein Ventilsteuernocken (51) eingreift, daß bei jedem Ventilzyklus in einem ersten Ventiltakt (82) mit mittlerem Ventilhub Druckluft aus der Gemischbildungsvorkammer (25) in die entsprechende Explosionskammer (5) gelangt und diese zumindest teilweise von Abgas reinigt, daß gleichzeitig oder dann in einem zweiten Ventiltakt (83) mit vollständigem Ventilhub zusätzlich zur Druckluft auch Kraftstoff über die Gemischbildungsvorkammer (25) in die Explosionskammer (5) gelangt und daß anschließend in einem dritten Ventiltakt (84) die Verbindung zwischen der Gemischbildungsvorkammer sowie der Explosionskammer unterbrochen und das Gemisch in der Explosionskammer entzündet wird.

16. Rotationsexplosionsmotor nach einem der Ansprüche 1 bis 15, dadurch gekennzeichnet, daß wenigstens zwei Explosionskammern (5) vorhanden sind.

17. Rotationsexplosionsmotor nach einem der Ansprüche 1 bis 16, dadurch gekennzeichnet, daß wenigstens eine Rotorkammer (10, 75) mit mindestens zwei Druckbeaufschlagungswänden (9) vorhanden ist.

18. Rotationsexplosionsmotor nach einem der Ansprüche 1 bis 17, gekennzeichnet durch einen manuell betätigbaren Ventilschieber (59) als Ventilverbindung einerseits zwischen dem Druckspeicher (21) sowie der Gemischbildungsvorkammer (25) und andererseits zwischen der verdichtete Fremd- oder Kühlluft liefernden Druckseite (63) des Verdichterrotors (17,43) sowie dem wenigstens einen Rückschlagventil (19) und/oder einem nach außen führenden Abflußkanal (61) für nicht mehr benötigte verdichtete Fremd- oder Kühlluft.

19. Rotationsexplosionsmotor nach Anspruch 18, dadurch gekennzeichnet, daß beim Motorstart der Ventilschieber (59) den Abflußkanal (61) für verdichtete Fremd- oder Kühlluft verschließt, ferner den Druckluftbereich des Druckspeichers (21) mit dem Bereich der Gemischbildungsvorkammer (25) öffnend verbindet und die Druckseite (63) des Verdichterrotors (43) mit dem wenigstens einen Rückschlagventil (19) öffnend verbindet, während gleichzeitig Druckluft aus der Druckluftkammer (67, 68) des Druckspeichers (21) über ein vorübergehend offenes Startventil (65) auf die Rotorschaufeln des Abgasrotors (27) gelangt.

20. Rotationsexplosionsmotor nach Anspruch 19, dadurch gekennzeichnet, daß nach dem Motorstart das Startventil (65) manuell oder automatisch geschlossen wird und der verstellbare Ventilschieber (59) die Druckluftverbindungen (60) einerseits von der Druckluftkammer (67, 68) des Druckspeichers (21) zur Gemischbildungsvorkammer (25) und andererseits von der Druckseite (63) des Verdichterrotors (43) erstens zu dem wenigstens einen Rückschlagventil (19) - und damit zum Druckspeicher (21) - und zweitens zu dem Abflußkanal (61) für verdichtete Fremd- oder Kühlluft entsprechend der erwünschten oder erforderlichen Motorleistung bzw. -drehzahl mehr oder weniger weit freigibt.

21. Rotationsexplosionsmotor nach Anspruch 19 oder 20, dadurch gekennzeichnet, daß zum Anhalten des Motors der Ventilschieber (59) den Abflußkanal (61) für verdichtete Fremd- oder Kühlluft vollständig öffnet und die Druckluftverbindungen vom Druckspeicher (21) zur Gemischbildungsvorkammer (25) und von der Druckseite (63) des Verdichterrotors (43) zu dem wenigstens einen Rückschlagventil (19) und damit zum Druckspeicher vollständig verschließt.

22. Rotationsexplosionsmotor nach einem der Ansprüche 1 bis 21, dadurch gekennzeichnet, daß der zum Druckspeicher (21) gehörige Kraftstofftank (23) einen dreiphasig arbeitenden Tankverschluß aufweist, der als Vorbereitung eines Betankens in einer ersten Betatigungsphase durch Drehen eines Tankverschlußdeckels ein Ventil zwischen dem Kraftstofftank (23) und der Druckluftkammer (67) des Druckspeichers (21) verschließt, der dann in einer zweiten Betatigungsphase durch Weiterdrehen des Tankverschlußdeckels zusatzlich den Kraftstofftank über das Ventil entlüftet und der dann nach erfolgtem Druckausgleich in einer dritten Betatigungsphase durch nochmaliges Weiterdrehen des Tankverschlußdeckels zusätzlich ein Abnehmen des Tankdeckels und ein Betanken des Kraftstofftanks durch den jetzt offenen Tankverschluß zulaßt, wobei nach dem Betanken der Tankverschlußdeckel auf den Tankverschluß aufgebracht, die Entlüftung beendet und dann die Verbindung zwischen dem Kraftstofftank sowie der Druckluftkammer des Druckspeichers wiederhergestellt werden.

23. Rotaionsexplosionsmotor nach Anspruch 22, gekennzeichnet durch eine zeitweilige Bewegungsarretierung zwischen den zweiten und dritten Betatigungsphasen zwecks Erzielung eines Druckausgleichs.

24. Rotationsexplosionsmotor nach einem der Ansprüche 1 bis 23, dadurch gekennzeichnet, daß die Druckluftkammer des Druckspeichers (21) einen motorinternen Kammerbereich (68) und einen motorexternen Kammerbereich (67) aufweist.

25. Rotationsexplosionsmotor nach einem der Ansprüche 1 bis 24, dadurch gekennzeichnet, daß die Rotorkammern (75) ausschließlich nach außen geöffnet sind und daß in dem umgebenden Stator (3) jeder Explosionskammer (5) in Umfangsrichtung mit Abstand folgend eine Abgas-Ablaßöffnung (79) nachgeordnet ist, in die das Abgas und der Überdruck aus den sich vorbeibewegenden Rotorkammern ableitbar sind.

26. Rotationsexplosionsmotor nach Anspruch 25, dadurch gekennzeichnet, daß die Abgas-Ablaßöffnungen (79) im Stator (3) mit einem sich nach außen öffnenden zentralen Abgas-Ablaßkanal (39) verbunden sind.

27. Rotationsexplosionsmotor nach einem der Ansprüche 1 bis 26, dadurch gekennzeichnet, daß er aus mehreren koaxial hintereinander angeordneten, scheibenförmigen und miteinander lösbar verspannten, modulartigen Motorelementen (81) besteht.

28. Rotationsexplosionsmotor nach einem der Ansprüche 1 bis 27, gekennzeichnet durch ein Kraftstoffsteuerventil (55) in einer Kraftstoff-Strömungsverbindung zwischen dem Kraftstofftank (23) und einer Ringleitung (56), die über Kraftstoffzuleitungen (58), in die Rückschlagventile eingebaut sind, mit den Bereichen der Gemischbildungsvorkammern (25) bzw. mit diesen vorgeschalteten nockengesteuerten Zusatzventilen (47) verbunden ist.

## Claims

1. Rotary internal combustion engine having a drive shaft, also having a drive rotor connected to the drive shaft in a manner fixed against relative rotation, which drive rotor has one or more peripherally distributed rotor chambers that open towards the outside and each have a plurality of obliquely extending pressure-impingement walls, which act as drive blades of a kind, for converting combustion pressure into a rotary motion of the rotor, and also having a stator surrounding the drive rotor in which stator there is constructed at least one combustion chamber which opens inwards towards the drive rotor and has a chamber outlet and past which the rotor chambers move via, in each case, at least two pressure-impingement walls simultaneously, an electrical spark plug and at least one mixture inlet, or one air inlet and one fuel inlet in each case, discharging, in a valve-controlled manner, into each combustion chamber,
wherein, firstly, each chamber outlet (7) of each combustion chamber (5), which combustion chamber is constructed so as to be valve-free on the chamber outlet side, is oriented approximately at right angles to each pressure-impingement wall (9), which moves past it, of a rotor chamber (10, 75), each chamber outlet (7) being arranged predominantly tangentially in the direction of rotation of the rotor and each pressure-impingement wall (9) being arranged predominantly radially,
wherein, secondly, there is provided, in each case, between rotor chambers (10, 75) which are adjacent at fairly large intervals in the peripheral direction, a continuously narrow seat (11) between the drive rotor (1) and its stator (3), which seat permits rotations of the rotor and is largely pressure-tight with respect to the combustion pulses,
wherein, thirdly, there is arranged on the drive shaft (12) an aspirating rotor (15), which is connected thereto in a manner fixed against relative rotation and is located upstream of the drive rotor (1), for aspirating external or cooling air which is conducted, for cooling purposes, through the drive rotor (1) and also over and/or through the stator (3) which surrounds the drive rotor and has the combustion chamber or chambers (5),
wherein, fourthly, there is arranged on the drive shaft (12) a compressor rotor (17, 43), which is connected thereto in a manner fixed against relative rotation and is located downstream of the drive rotor (1), for compressing the external or cooling air conducted to it, when the engine is running, by the aspirating rotor (15) via the drive rotor (1) and its stator (3),
wherein, fifthly, the compressed external or cooling air passes, when the engine is running, via at least one check valve (19) to a pressure reservoir (21) having a compressed air chamber (67, 68) and a fuel tank (23),
wherein, sixthly, the pressure reservoir can be connected, for an engine-starting operation and for the running of the engine, to at least one valve-controlled mixture-forming pre-chamber (25) leading to the combustion chamber,
and wherein, seventhly, the pressure reservoir can, during the engine-starting operation, be connected transiently, in fluidic terms, to the rotor blades of a rotor connected to the drive shaft (12), such as an exhaust gas rotor (27) connected downstream of the compressor rotor (17), the compressed air thus conducted in also initially directly serving, after the engine has been stopped, to start the engine in a self-starting manner.

2. The rotary engine of claim 1, characterized in that the drive shaft (12) is coupled at the engine outlet to a centrifugal coupling (29) that can be connected to an element to be driven.

3. The rotary engine of claim 2, characterized in that the centrifugal coupling (29) is embodied as a detent coupling, which snaps into engagement gently as the engine runs up to speed, if a certain rpm difference is exceeded, and snaps out of engagement gently when the engine runs down to a stop.

4. The rotary engine of claim 2 or 3, characterized in that the centrifugal coupling is followed by an energy-storing rotary mass, such as a flywheel, that can be connected to an element to be driven.

5. The rotary engine of one of claims 1-4, characterized in that a rotor (15), connected in a manner fixed against relative rotation to the drive shaft (12), and a stator (33) surrounding the rotor is present with electromagnetic ignition means (35) for generating electrical ignition energy for the spark plugs (37) of the combustion chambers (5).

6. The rotary engine of claim 5, characterized in that the electromagnetic ignition means (35) are arranged on the aspirating rotor (15) and on a stator (33) surrounding it.

7. The rotary engine of one of claims 1-6, characterized by a number and arrangement of the walls subject to combustion pressure (9) of each rotor chamber (10, 75) such that during the entire explosion surge in a combustion chamber (5), at least at the rated rpm, walls subject to combustion pressure (9) move constantly past the chamber outlet (7).

8. The rotary engine of one of claims 1-7, characterized by a number and arrangement of the rotor chamber (10, 75) and combustion chambers (5) and by an open- or closed-loop control of the explosion events such that at the onset of each explosion surge, at least the first two walls subject to combustion pressure (9) in the circumferential direction move past the chamber outlet (7).

9. The rotary engine of one of claims 1-8, characterized in that the rotor chambers (10) discharge in the direction toward the interior of the drive rotor (1) into at least one longitudinal, outward-opening exhaust gas outlet or removal duct (39).

10. The rotary engine of claim 9, characterized in that the rotor chambers (10) on the outlet side are embodied as fluidically choked toward the at least one exhaust gas outlet or removal duct (39).

11. The rotary engine of claim 9 or 10, characterized in that to improve the energy yield, rotor drive blades (41) connected to the drive shaft (12) dip into the at least one exhaust gas outlet or removal duct (39).

12. The rotary engine of claim 11, characterized in that at least some of the rotor drive blades (41) belong to the drive rotor (1).

13. The rotary engine of one of claims 9-12, characterized in that the exhaust gas outlet or removal duct (39) experiences a flow through it of air delivered by the aspirating rotor (15) and mixing with the exhaust gas from the rotor chambers (10).

14. The rotary engine of one of claims 1-13, characterized in that the compressor rotor (17, 43) and its stator (45) are embodied with mechanical, magnetic or electrical valve control means (47, 49, 51) for delivering both fuel and air at the proper time to the combustion chambers (5).

15. The rotary engine of claim 14, characterized in that mechanical valve control means have a cam track (49) moving in slaved fashion with the compressor rotor (43), which track is engaged for each valve by one valve control cam (51) ; that upon each valve cycle, in a first valve stroke (82) with medium valve travel, compressed air from the mixture forming prechamber (25) reaches the corresponding combustion chamber (5) and at least partially cleans it of exhaust gas; that simultaneously or subsequently in a second valve stroke (83) with full valve travel, in addition to the compressed air fuel also passes via the mixture forming prechamber (25) into the combustion chamber (5); and that subsequently in a third valve stroke (84), the communication between the mixture forming prechamber and the combustion chamber is interrupted, and the mixture in the combustion chamber is ignited.

16. The rotary engine of one of claims 1-15, characterized in that at least two combustion chambers (5) are present.

17. The rotary engine of one of claims 1-16, characterized in that at least one rotor chamber (10, 75) with at least two walls subject to combustion pressure (9) is present.

18. The rotary engine of one of claims 1-17, characterized by a manually actuatable valve slide (59) as a valve connection on the one hand between the pressure reservoir (21) and the mixture forming prechamber (25) and on the other between the compression side (63), furnishing the compressed external or cooling air, of the compressor rotor (17, 43) and the at least one check valve (19) and/or an outward-leading outflow duct (61) for no longer needed external or cooling air.

19. The rotary engine of claim 18, characterized in that upon engine starting, the valve slide (59) closes the outflow duct (61) for compressed external or cooling air, and also causes the compressed air region of the pressure reservoir (21) to communicate in an opening way with the region of the mixture forming prechamber (25) and in an opening way makes the compression side (63) of the compressor rotor (43) communicate with the at least one check valve (19), while at the same time compressed air from the compressed air chamber (67, 68) of the pressure reservoir (21) passes via a temporarily open starting valve (65) to reach the rotor blades of the exhaust gas rotor (27).

20. The rotary engine of claim 19, characterized in that after engine starting, the starting valve (65) is manually or automatically closed, and the adjustable valve slide (59) more or less widely opens the compressed air connections (60), on the one hand from the compressed air chamber (67, 68) of the pressure reservoir (21) to the mixture forming prechamber (25) and on the other from the compression side (63) of the compressor rotor (43), first to the at least one check valve (19) - and thus to the pressure reservoir (21) - and second to the outflow duct (61) for compressed external or cooling air, in accordance with the desired or required engine output or engine rpm.

21. The rotary engine of claim 19 or 20, characterized in that for stopping the engine, the valve slide (59) fully opens the outflow duct (61) for compressed external or cooling air and fully closes the compressed air connections from the pressure reservoir (21) to the mixture forming prechamber (25) and from the compression side (63) of the compressor rotor (43) to the at least one check valve (19) and thus to the pressure reservoir.

22. The rotary engine of one of claims 1-21, characterized in that the fuel tank (23) belonging to the pressure reservoir (21) has a tank closure operating in three phases, which to prepare for tank filling, in a first actuation phase, by rotation of a tank closure cap closes a valve between the fuel tank (23) and the compressed air chamber (67) of the pressure reservoir (21), which then in a second actuation phase by further rotation of the tank closure cap also vents the fuel tank via the valve and then, after a pressure equilibrium has been established, in a third actuation phase by rotating the tank closure cap again, additionally allows the tank cap to be removed and allows filling of the fuel tank through the now-open tank closure, and after the tank is filled the tank closure cap is placed on the tank closure, the venting is terminated, and the communication between the fuel tank and the compressed air chamber of the pressure reservoir is then reestablished.

23. The rotary engine of claim 22, characterized by an intermittent locking of motion between the second and third actuation phases, for the sake of achieving a pressure equilibrium.

24. The rotary engine of one of claims 1-23, characterized in that the compressed air chamber of the pressure reservoir (21) has one chamber region (68) internal to the engine and one chamber region (67) external to the engine.

25. The rotary engine of one of claims 1-24, characterized in that the rotor chambers (75) are opened to the outside exclusively, and that in the surrounding stator (3) each combustion chamber (5) is followed in the circumferential direction, in spaced-apart fashion, by an exhaust gas outlet opening (79), into which the exhaust gas and the overpressure from the rotor chambers moving past can be diverted.

26. The rotary engine of claim 25, characterized in that the exhaust gas outlet openings (79) in the stator (3) communicate with an outward-opening central exhaust gas outlet or removal duct (39).

27. The rotary engine of one of claims 1-26, characterized in that it comprises a plurality of modular engine elements (81) of disklike shape, arranged coaxially one after the other and clamped together releasably.

28. The rotary engine of one of claims 1-27, characterized by a fuel control device (55) in a fuel flow connection between the fuel tank (23) and a ring line (56), which communicates via fuel supply lines (58), in which check valves are built in, with the regions of the mixture forming prechambers (25), or with cam-controlled additional valves (47) preceding these prechambers.

## Revendications

1. Moteur à explosion rotatif comportant un arbre d'entraînement, un rotor d'entraînement solidaire en rotation de celui-ci qui présente une chambre ou plusieurs chambres réparties a sa périphérie, ouvertes vers l'extérieur et ayant chacune plusieurs parois d'action de pression s'étendant obliquement et agissant comme une sorte d'ailette d'entraînement, destinées à transformer la pression d'explosion en un mouvement de rotation du rotor, un stator qui entoure le rotor d'entraînement et dans lequel est faite au moins une chambre d'explosion ouverte vers l'intérieur vers le rotor d'entraînement et ayant une sortie devant laquelle les chambres du rotor passent par chacune simultanément au moins deux parois d'action de pression, dans chaque chambre d'explosion débouchant une bougie électrique d'allumage et au moins une entrée de mélange ou une entrée d'air et une entrée de carburant avec commande par soupape, dans lequel,
premièrement, chaque sortie (7) de chaque chambre d'explosion (5), qui n'a pas de soupape du côté sortie, est orientée à peu près perpendiculairement à chaque paroi d'action de pression (9) d'une chambre de rotor (10, 75) qui passe devant elle, chaque sortie (7) étant placée principalement tangentiellement dans la direction de rotation du rotor et chaque paroi d'action de pression (9) étant placée principalement radialement,
deuxièmement, entre les chambres de rotor voisines (10, 75) très espacées dans la direction circonférentielle, est prévu un ajustement (11) partout serré, permettant la rotation du rotor et à peu près étanche à la pression relativement aux chocs d'explosion, entre le rotor d'entraînement (1) et son stator (3),
troisièmement, sur l'arbre d'entraînement (12) est monté un rotor d'aspiration (15), solidaire en rotation de celui-ci et placé en amont du rotor d'entraînement (1), pour l'aspiration d'air extérieur ou de refroidissement qui est envoyé aux fins de refroidissement dans le rotor d'entraînement (1) et sur et/ou dans le stator (3) pourvu de la ou des chambres d'explosion (5) qui entoure celui-ci,
quatrièmement, sur l'arbre d'entraînement (12) est monté un rotor compresseur (17, 43), solidaire en rotation de celui-ci et placé en aval du rotor d'entraînement (1), pour la compression de l'air extérieur ou de refroidissement qui lui est envoyé pendant le fonctionnement du moteur par le rotor d'aspiration (15) par l'intermédiaire du rotor d'entraînement (1) et du stator (3) de celui-ci,
cinquièmement, pendant le fonctionnement du moteur, l'air extérieur ou de refroidissement comprimé va par au moins un clapet de non-retour (19) à un magasin sous pression (21) qui comporte une chambre à air comprimé (67, 68) et un réservoir de carburant (23),
sixièmement, le magasin sous pression peut, pour le démarrage du moteur et pour le fonctionnement de celui-ci, être relié à une préchambre de formation de mélange (25) commandée par soupape et menant à la chambre d'explosion,
septièmement, le magasin sous pression peut, pendant l'opération de démarrage du moteur, être mis temporairement en communication avec les ailettes d'un rotor lié à l'arbre d'entraînement (12), par exemple d'un rotor à gaz brûlés (27) placé après le rotor compresseur (17), l'air comprimé ainsi envoyé servant aussi, après un arrêt du moteur, d'abord aussi à l'autodémarrage du moteur directement.

2. Moteur à explosion rotatif selon la revendication 1, caractérisé par le fait que l'arbre d'entraînement (12) est, à la sortie du moteur, accouplé à un embrayage centrifuge (29) qui peut être joint à un élément à entraîner.

3. Moteur à explosion rotatif selon la revendication 2, caractérisé par le fait que l'embrayage centrifuge (29) est un embrayage à grille qui, au démarrage du moteur, s'enclenche doucement lorsqu'une différence déterminée de vitesse est dépassée, et qui se déclenche doucement lorsque le moteur ralentit.

4. Moteur à explosion rotatif selon l'une des revendications 2 et 3, caractérisé par le fait qu'après l'embrayage centrifuge est placée une masse tournante qui accumule de l'énergie et peut être jointe à l'élément à entraîner, et est par exemple un volant.

5. Moteur à explosion rotatif selon l'une des revendications 1 à 4, caractérisé par le fait qu'il y existe un rotor (15) solidaire en rotation de l'arbre d'entraînement (12) et un stator (33) qui entoure ce rotor et est pourvu de moyens électromagnétiques d'allumage (35) pour la production d'énergie électrique d'allumage pour les bougies (37) des chambres d'explosion (5).

6. Moteur à explosion rotatif selon la revendication 5, caractérisé par le fait que les moyens électromagnétiques d'allumage (35) sont placés sur le rotor d'aspiration (15) et sur un stator (33) qui entoure celui-ci.

7. Moteur à explosion rotatif selon l'une des revendications 1 à 6, caractérisé par un nombre et un placement des parois d'action de pression (9) de chaque chambre de rotor (10, 75) tels que pendant tout le choc d'explosion dans une chambre d'explosion (5), au moins à la vitesse nominale de rotation, des parois d'action de pression (9) passent constamment devant la sortie (7) de la chambre.

8. Moteur à explosion rotatif selon l'une des revendications 1 à 7, caractérisé par un nombre et un placement des chambres de rotor (10, 75) et des chambres d'explosion (5) et par une commande ou une régulation des explosions tels qu'au début de chaque choc d'explosion, au moins les deux premières parois d'action de pression (9) dans la direction circonférentielle passent devant la sortie (7) de la chambre.

9. Moteur à explosion rotatif selon l'une des revendications 1 à 8, caractérisé par le fait que les chambres de rotor (10) débouchent en direction de l'intérieur du rotor d'entraînement (1) dans au moins un conduit longitudinal d'évacuation des gaz brûlés (39) s'ouvrant vers l'extérieur.

10. Moteur à explosion rotatif selon la revendication 9, caractérisé par le fait que les chambres de rotor (10) présentent un étranglement du côté sortie vers le ou les conduits d'évacuation des gaz brûlés (39).

11. Moteur à explosion rotatif selon l'une des revendications 9 et 10, caractérisé par le fait que pour l'amélioration du rendement énergétique, dans le ou les conduits d'évacuation des gaz brûlés (39) plongent des ailettes d'entraînement de rotor (41) jointes à l'arbre d'entraînement (12).

12. Moteur à explosion rotatif selon la revendication 11, caractérisé par le fait qu'au moins quelques-unes des ailettes d'entraînement de rotor (41) appartiennent au rotor d'entraînement (1).

13. Moteur à explosion rotatif selon l'une des revendications 9 à 12, caractérisé par le fait que le conduit d'évacuation des gaz brûlés (39) est parcouru par de l'air apporté par le rotor d'aspiration (15) et se mélangeant aux gaz brûlés qui sortent des chambres de rotor (10).

14. Moteur à explosion rotatif selon l'une des revendications 1 à 13, caractérisé par le fait que le rotor compresseur (17, 43) et son stator (45) sont pourvus de moyens mécaniques, magnétiques ou électriques de commande de soupapes (47, 49, 51) pour l'envoi en temps voulu de carburant et d'air aux chambres d'explosion (5).

15. Moteur à explosion rotatif selon la revendication 14, caractérisé par le fait que des moyens mécaniques de commande de soupapes présentent un chemin de came mû avec le rotor compresseur (43) dans lequel s'engage pour chaque soupape une came de commande de soupape (51), qu'à chaque cycle de soupape, dans un premier temps de soupape (82) avec levée moyenne de la soupape, de l'air comprimé va de la préchambre de formation de mélange (25) à la chambre d'explosion (5) correspondante et débarrasse au moins partiellement celle-ci des gaz brûlés, qu'en même temps ou ensuite dans un deuxième temps de soupape (83) avec levée complète de la soupape, en plus de l'air comprimé, du carburant va par la préchambre de formation de mélange (25) à la chambre d'explosion (5), et qu'ensuite, dans un troisième temps de soupape (84), la communication entre la préchambre de formation de mélange et la chambre d'explosion est coupée et le mélange est allumé dans la chambre d'explosion.

16. Moteur à explosion rotatif selon l'une des revendications 1 à 15, caractérisé par le fait qu'il y existe au moins deux chambres d'explosion (5).

17. Moteur à explosion rotatif selon l'une des revendications 1 à 16, caractérisé par le fait qu'il y existe au moins une chambre de rotor (10, 75) ayant au moins deux parois d'action de pression (9).

18. Moteur à explosion rotatif selon l'une des revendications 1 à 17, caractérisé par un tiroir manoeuvrable manuellement (59) comme liaison d'une part entre le magasin sous pression (21) et la préchambre de formation de mélange (25) et d'autre part entre le côté refoulement (63) du rotor compresseur (17, 43) qui fournit de l'air extérieur ou de refroidissement comprimé et le ou les clapets de non-retour (19) et/ou un conduit d'écoulement menant à l'extérieur (61) pour l'air extérieur ou de refroidissement comprimé qui n'est plus nécessaire.

19. Moteur à explosion rotatif selon la revendication 15, caractérisé par le fait qu'au démarrage du moteur, le tiroir (59) ferme le conduit d'écoulement (61) pour l'air extérieur ou de refroidissement comprimé, en outre met la zone à air comprimé du magasin sous pression (21) en communication avec la zone de la préchambre de formation de mélange (25) et met le côté refoulement (63) du rotor compresseur (43) en communication avec le ou les clapets de non-retour (19), tandis qu'en même temps, de l'air comprimé va de la chambre à air comprimé (67, 68) du magasin sous pression (21) aux ailettes du rotor à gaz brûlés (27) par une soupape de démarrage (65) ouverte temporairement.

20. Moteur à explosion rotatif selon la revendication 19, caractérisé par le fait qu'après le démarrage du moteur, la soupape de démarrage (65) est fermée manuellement ou automatiquement et le tiroir mobile (59) libère plus ou moins suivant la puissance ou la vitesse désirée ou nécessaire du moteur les voies d'air comprimé (60) d'une part de la chambre à air comprimé (67, 68) du magasin sous pression (21) à la préchambre de formation de mélange (25) et d'autre part du côté refoulement (63) du rotor compresseur (43) premièrement au ou aux clapets de non-retour (19), et ainsi au magasin sous pression (21), et deuxièmement au conduit d'écoulement (51) pour l'air extérieur ou de refroidissement comprimé.

21. Moteur à explosion rotatif selon l'une des revendications 19 et 20, caractérisé par le fait que pour l'arrêt du moteur, le tiroir (59) ouvre complètement le conduit d'écoulement (61) pour l'air extérieur ou de refroidissement comprimé et ferme complètement les voies d'air comprimé du magasin sous pression (21) à la préchambre de formation de mélange (25) et du côté refoulement (63) du rotor compresseur (43) au ou aux clapets de non-retour (19) et ainsi au magasin sous pression.

22. Moteur à explosion rotatif selon l'une des revendications 1 à 21, caractérisé par le fait que le réservoir de carburant (23) faisant partie du magasin sous pression (21) présente une fermeture de réservoir fonctionnant en trois phases qui, comme préparation à un ravitaillement, dans une première phase de manoeuvre, ferme par rotation d'un bouchon de réservoir une soupape entre le réservoir de carburant (23) et la chambre à air comprimé (67) du magasin sous pression (21), qui ensuite, dans une deuxième phase de manoeuvre, par rotation supplémentaire du bouchon de réservoir, met en plus le réservoir de carburant à l'atmosphère par la soupape, et qui ensuite, après égalisation de pression, dans une troisième phase de manoeuvre, par nouvelle rotation supplémentaire du bouchon de réservoir, permet d'enlever ce dernier et de remplir le réservoir de carburant par la fermeture de réservoir maintenant ouverte, et après le remplissage, on remet le bouchon de réservoir sur la fermeture de réservoir, coupe la communication avec l'atmosphère et ensuite rétablit la liaison entre le réservoir de carburant et la chambre à air comprimé du magasin sous pression.

23. Moteur à explosion rotatif selon la revendication 22, caractérisé par un arrêt temporaire de mouvement entre la deuxième et la troisième phases de manoeuvre pour la réalisation d'une égalisation de pression.

24. Moteur à explosion rotatif selon l'une des revendications 1 à 23, caractérisé par le fait que la chambre à air comprimé du magasin sous pression (21) présente un partie (68) intérieure au moteur et une partie (67) extérieure au moteur.

25. Moteur à explosion rotatif selon l'une des revendications 1 à 24, caractérisé par le fait que les chambres de rotor (75) sont ouvertes exclusivement vers l'extérieur et que dans le stator placé autour (3), chaque chambre d'explosion (5) est suivie à distance dans la direction circonférentielle d'un orifice d'évacuation des gaz brûlés (79) par lequel les gaz brûlés et la surpression peuvent être évacués des chambres de rotor qui passent devant.

26. Moteur à explosion rotatif selon la revendication 25, caractérisé par le fait que les orifices d'évacuation des gaz brûlés (79) faits dans le stator (3) communiquent avec un conduit central d'évacuation des gaz brûlés (39) qui s'ouvre vers l'extérieur.

27. Moteur à explosion rotatif selon l'une des revendications 1 à 26, caractérisé par le fait qu'il est constitué de plusieurs éléments modulaires en forme de disque (81) placés coaxialement les uns derrière les autres et serrés ensemble de manière démontable.

28. Moteur à explosion rotatif selon l'une des revendications 1 à 27, caractérisé par une soupape de commande de carburant (55) placée dans une voie d'écoulement de carburant entre le réservoir de carburant (23) et une conduite circulaire (56) qui est reliée par des conduites d'alimentation en carburant (58), dans lesquelles sont montés des clapets de non-retour, aux zones des préchambres de formation de mélange (25) ou à des soupapes supplémentaires (47) commandées par came placées avant celles-ci.
